(19) Europäisches Patentamt
European Patent Office
Office européen des brevets

(11) **EP 1 610 030 B1**

(12) **EUROPEAN PATENT SPECIFICATION**

(45) Date of publication and mention
of the grant of the patent:
**17.05.2017 Bulletin 2017/20**

(51) Int Cl.:
***F16G 13/06*** *(2006.01)*

(21) Application number: **05008342.7**

(22) Date of filing: **16.04.2005**

(54) **Power transmission chain**

Treibkette

Chaîne de transmission

(84) Designated Contracting States:
**DE FR GB**

(30) Priority: **25.06.2004 JP 2004187889**

(43) Date of publication of application:
**28.12.2005 Bulletin 2005/52**

(73) Proprietor: **Tsubakimoto Chain Co.**
**Osaka 530-0005 (JP)**

(72) Inventors:
• **Tohara, Takashi**
**Osaka 530-0018 (JP)**

• **Sato, Toshifumi**
**Osaka 530-0018 (JP)**

(74) Representative: **Patentanwälte**
**Hosenthien-Held und Dr. Held**
**Klopstockstrasse 63-65**
**70193 Stuttgart (DE)**

(56) References cited:
**DE-U1- 20 305 741     US-A- 4 315 750**

• **DATABASE WPI Section PQ, Week 198350**
**Derwent Publications Ltd., London, GB; Class**
**Q64, AN 1983-842845 XP002362938 -& SU 994 831**
**A (STAVROPOL POLY) 7 February 1983**
**(1983-02-07)**

**Description**

This invention relates to power transmission chains of the kind used in the camshaft drive mechanism of an internal combustion engine, in conveyors, and in power transmission mechanisms of industrial machinery.

Roller chains are widely used as power transmission media for driving one or more camshafts of an internal combustion engine from the engine crankshaft. Metal roller chains are ideal for this purpose, as they exhibit excellent endurance, and are able to meet the increasing demand for high load-bearing capability, high speed operation, and low maintenance. Thus, roller chains have displaced toothed belts in the timing transmissions of more powerful automobile engines.

A typical conventional metal roller chain is an endless chain composed of alternately connected and overlapping inner and outer links. Each inner link comprises a pair of opposed inner plates, each having a pair of bushing holes, and a pair of bushings, each bushing being press-fit in one bushing hole of one of the opposed inner plates and in one bushing hole of the other of plate. Each outer link comprises a pair of opposed outer plates, each having a pair of pin holes, and a pair of pins, each pin being press-fit in one pin hole of one of outer plates and in one pin hole of the other outer plate. The outer plates of each outer link are disposed in overlapping relation with, and on the outsides of, inner plates of adjacent inner links, and each pin of an outer link extends through, and is rotatable in, a bushing of an adjacent inner link. Thus, the inner and outer links are pivotally connected to one another.

In the conventional metal roller chain, the pitch, as measured from one bushing to the next, is uniform over the entire length of the chain. Therefore, the pitch, measured from one to the other of the two adjacent bushings of any two successive inner links of the chain, is the same as the pitch measured from one bushing to another of the two bushings on any one of the inner links of the chain. Such a structure is shown, for example, in "Chain No Ohanashi" ("Chain's story"), by Masataka Nakagome, published by Japanese Standards Association (JSA) on January 20, 1997. The pitch can be measured between bushing centers, or alternatively from a point on the outer circumference of a bushing to a corresponding point on the outer circumference of an adjacent bushing.

The US 4,315,750 A discloses a power transmission chain comprising alternately connected and overlapping inner and outer links, in which each inner link comprises a pair of opposed inner plates, each inner plate having a pair of bush holes, and a pair of bushings, each bushing being press-fit in one bushing hole of one of the inner plates and in one bushing hole of the other inner plates, each outer link comprises a pair of opposed outer plates, each outer plate having a pair of pin holes, and a pair of pins, each pin being press-fit in one pin hole of one of the outer plates and in one pin hole of the other of theo outer plates. The outer plates of each outer link are disposed in overlapping relation with, and on the outsides of, inner plates of adjacent inner links, and each pin of an outer link extends through, and is rotable in, a bushing of an adjacent inner link, wherby the inner and outer links are pivotally connected to another. The chain has a first pitch $P_L$ and a second pitch $P_S$, which are the distances of the middle of the respective pins. The unused chain has the relationship of the pitches $P_L$ and $P_S$ as shown below, if the pitch of the teeth of the sprocket is defined as $P_0$:

$$P_L = P_0 + \Sigma$$

$$P_S = P_0 - \Sigma$$

$$P_S < P_0 < P_L$$

$$2P_0 = P_L + P_S$$

Such a chain reduces the amount of wear and heat resulting from the friction.

The conventional roller chain tends to produce a considerable amount of noise when in operation, and frequently fails due to the formation of cracks in its rollers caused by interference with the sprocket teeth with which the chain is in mesh. Object of this invention is to solve the above-mentioned problems of conventional roller chains, and to provide a roller chain that produces little noise and has a long useful life.

Through intensive study, we have found that, in a roller chain, wear on the inner circumferential surface of the bushing, and on the outer circumferential surface of the pin does not take place at a steady rate over time. Rather, such wear initially occurs at a rapid rate over a short time when the newly manufactured chain is first used. Then, shortly after chain is placed into service, the rate of wear of the pin and bushing decreases, and wear proceeds slowly over a long period of time. As a result, the chain typically operates smoothly, and produces little noise, when initially placed into service. However, after a short time, the pitch measured from one of two adjacent bushings of two successive inner links to the other increases due to wear between those bushings and the pins which extend through them. On the other hand, the pitches measured from one bushing to the other in the two bushings of any given link do not change significantly over time. As a result, elongation of the chain occurs quickly during initial operation of the chain, and the elongation is such that the distances between the bushings become alternately small and large. When these variations in pitch occur, the chain no longer meshes smoothly with its sprockets, and generates noise. When the variations in pitch increase still further, interference occurs between the rollers and the heads of the sprocket teeth interfered with a tooth head of the sprocket, which causes the cracks to form in the rollers.

The chain according to the invention is a chain similar in structure to the conventional chain, in that it is composed of alternately connected and overlapping inner and outer links. Each inner link comprises a pair of opposed inner plates, each having a pair of bushing holes, and a pair of bushings, each bushing being press-fit in one bushing hole of one of the opposed inner plates and in one bushing hole of the other of plate. Each outer link comprises a pair of opposed outer plates, each having a pair of pin holes, and a pair of pins, each pin being press-fit in one pin hole of one of outer plates and in one pin hole of the other outer plate. The outer plates of each outer link are disposed in overlapping relation with, and on the outsides of, inner plates of adjacent inner links, and each pin of an outer link extends through, and is rotatable in, a bushing of an adjacent inner link. Thus, the inner and outer links are pivotally connected to one another. However, the chain of the invention differs from the conventional chain in that, in the chain, as manufactured, that is, in the chain before it is placed into service, a first uniform pitch, measured from one to the other of the two adjacent bushings of any two successive inner links of the chain, and a second uniform pitch, measured from one bushing to another of the two bushings on any one of the inner links of the chain are different, the first uniform pitch being smaller than the second uniform pitch.

Preferably the first uniform pitch being smaller than the second uniform pitch by an amount equal to the initial wear elongation of the chain. Depending on the initial wear elongation of the chain, the first uniform pitch is usually about 0,1 % (i.e. in especially between 0,05 % and 0,15 %) smaller than the second uniform pitch.

Because a large proportion of the overall wear of the chain takes place over a short time when the chain is first placed into service, the pitches tend to equalize in that short time, and remain nearly equal, allowing the chain to operate quietly for a long time, and avoiding early failure due to formation of cracks in the rollers.

Although the invention is primarily useful in a roller chain, that is, a chain in which a roller is provided on each bushing, certain advantages of the invention, such as noise reduction, can be realized in a chain having a similar structure, but in which rollers are not used.

FIGs. 1(a) and 1(b)     are graphs respectively comparing the pitch difference and noise level of a roller chain in accordance with the invention and a conventional roller chain, as they vary over time,

FIG. 2     is a plan view a roller chain in accordance with the invention,

FIG. 3     is a graph showing elongation over time for a roller chain in accordance with the invention, and

FIG. 4     is a perspective view, partially broken away showing a part of a roller chain in accordance with the invention.

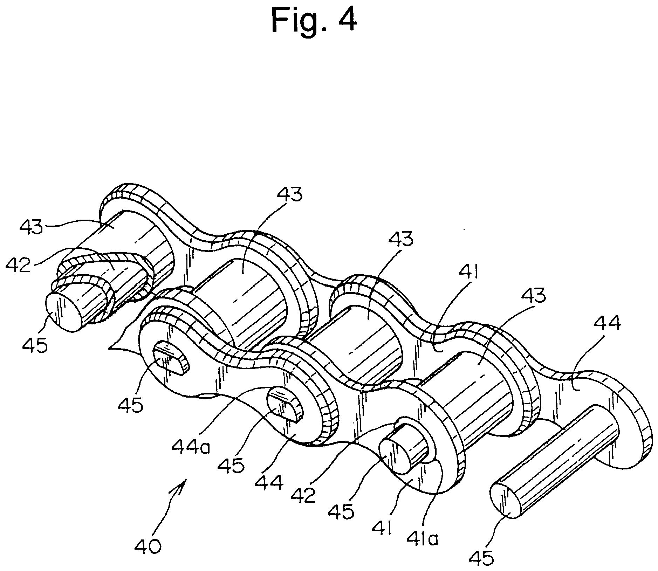

In the chain 40 according to the invention, as depicted in FIG. 4, inner links and outer links are arranged in overlapping relationship along the length of the chain 40. Each inner link comprises a pair of opposed inner plates 41, having bushing holes 41a, in which bushings 42 are press fit. Rollers 43 are freely rotatable on the bushings 42. Each outer link comprises a pair of opposed outer plates 44, having pin holes 44a in which pins 45 are press fit. Thus, each inner link is composed of two inner plates 41, two bushings 42 and two rollers 43, and each outer link is composed of two outer plates 44 and two pins 45. The pins 45 of each outer link extend through bushings 42 of adjacent inner links, and are rotatable therein so that the adjacent links can pivot relative to one another.

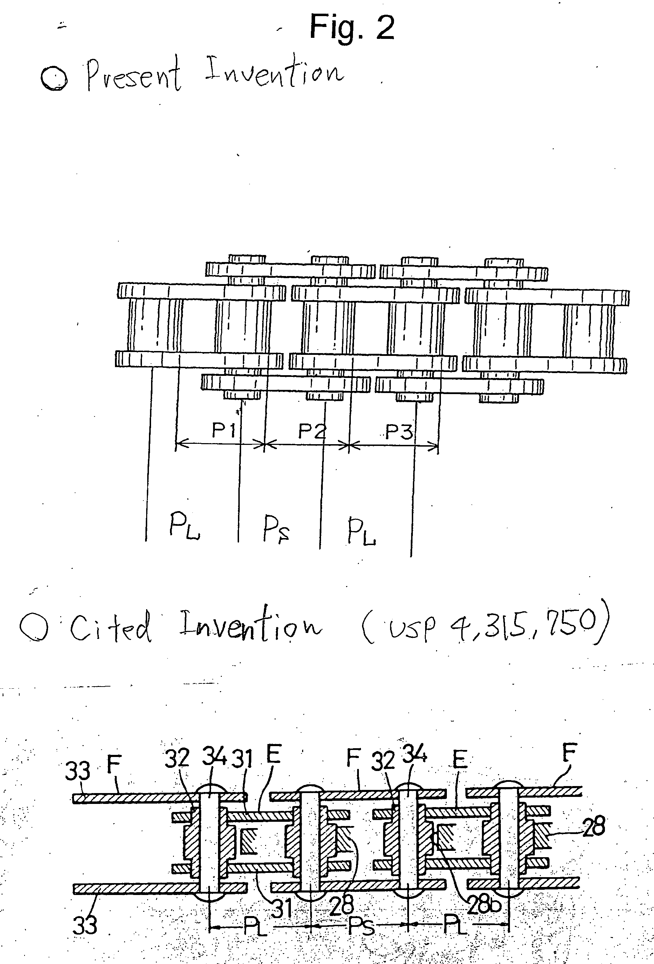

As shown in FIG. 2, in the chain 40 according to the invention the pitches P1 and P3 are equal to each other. Each of these pitches P1 and P3, in the following referred to as second pitches, is measured between corresponding points on the two rollers 43 on an inner link, and is equivalent to the pitch as measured between corresponding points on the bushings (not shown in FIG. 2). The first pitch P2, however, which is the pitch measured between corresponding points on adjacent rollers 43 (or bushings) of two successive inner links, is smaller than the second pitch P1 when the chain 40 is initially manufactured, and becomes equal to, or slightly greater than, the second pitch P1, during a short initial period of use of the chain 40.

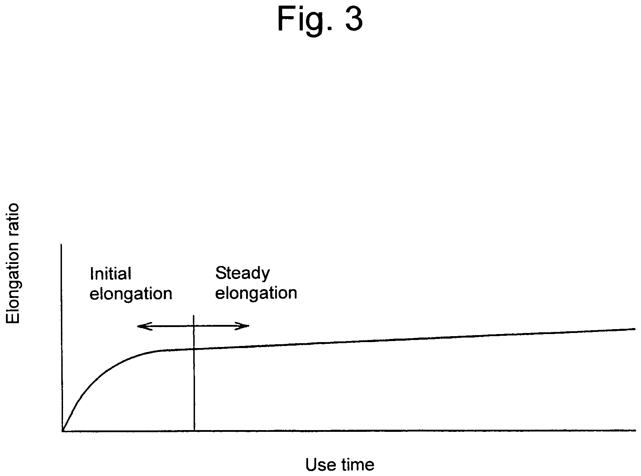

The elongation ratio of a chain 40 is the ratio of the difference between the initial and final length of the chain 40 to the initial length, expressed as a percent. As shown in FIG. 3, (which assumes continuous operation under constant load) the elongation of a chain 40 (as represented by the "elongation ratio") increases rapidly during an initial elongation interval. However, during this initial interval, the rate of elongation continuously decreases. After the initial interval, the elongation ratio increases slowly, at a constant rate. Thus, the initial elongation may be defined as the amount of elongation that takes place during the time interval between the beginning of the operation of a new chain 40, and the time at which the rate of elongation becomes constant.

The initial elongation of a chain 40 depends on the materials, dimensions, and shapes of its bushings 42 and pins 45. In an example of a chain 40 having a nominal pitch of 8 mm, measurements were taken of the elongation due to wear. The initial elongation ratio of the chain 40 was about 0.1 %. That is, the chain 40 elongated by 0.08 mm for each link. Accordingly, with the second pitches P1 and P3 (FIG. 2) set at 8mm, and the first pitch P2 set at 7.992 mm, the first pitch P2 will increase to about 8 mm during the initial elongation, and will remain at a level very near 8 mm for a long time while the chain 40 is in use. The first pitch P2 can be easily set by controlling the distance between the pin holes 44a of the outer links.

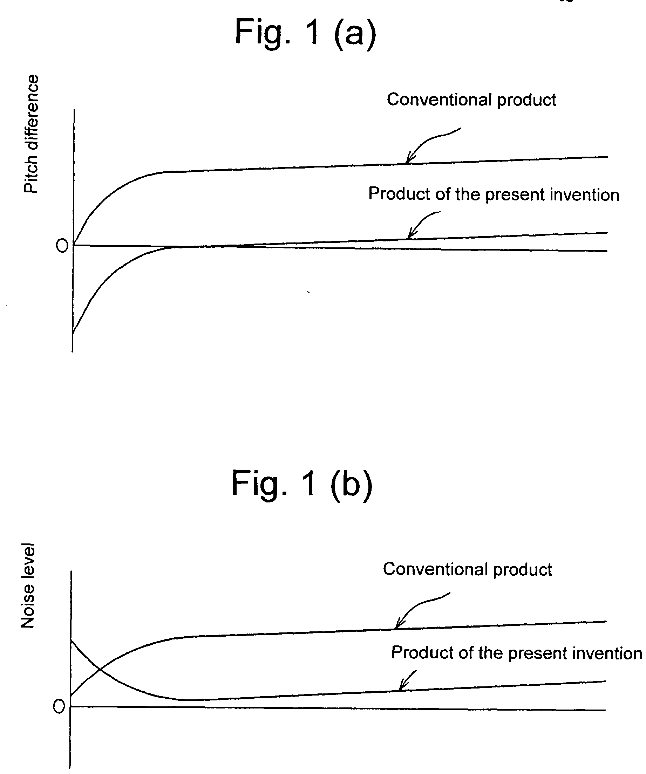

As shown in FIG. 1(a), with a typical conventional chain having a nominal pitch of 8 mm, pitch difference, that is, the difference between the pitch measured from one to the other of adjacent bushings 42 of successive inner links and the pitch measured from one to the other of two bushings 42 of the same inner link, begins at zero, and quickly increases to a value of about 0.08 mm, and then continues to increase, steadily, but very gradually, from 0.08 mm to a value slightly in excess of 0.08 mm. On the other hand, with the chain 40 in accordance with the invention, the pitch difference begins at a value of -.08 mm, quickly increases to zero, and then steadily, but very gradually from zero to a value slightly in excess of zero. Thus, after the initial elongation takes place in the chain 40 in accordance with the invention, the initial pitch difference is removed, and the pitch difference remains very close to zero over a long time during the useful life of the chain. Accordingly, after the initial elongation, the roller chain of time.

As shown in FIGS. 1(b), the noise level produced by the chain 40 in accordance with the invention is initially higher than that produced by the conventional chain. But, as the initial elongation takes place, the noise level produced by the conventional chain increases, while the noise level produced by the chain 40 in accordance with the invention decreases. Thereafter, the noise level produced by the chain 40 in accordance with the invention increases, but only very gradually over a long period of time, as the pitch difference increases at a steady but slow rate.

The chain 40 in accordance with the invention is a low noise chain especially useful In automotive engines, but also useful in various kinds of conveyors and industrial power transmissions. The chain 40 can be produced without special production equipment and expensive materials, and reduction in noise can be realized simply by controlling the distance between the pin holes 44a of the outer plates 44.

## REFERENCE NUMBERS

[0020]

| | |
|---|---|
| 40 | chain |
| 41 | inner plate |
| 41a | bushing hole |
| 42 | bushing |
| 43 | roller |
| 44 | outer plate |
| 44a | pin hole |
| 45 | pin |
| P1 | second pitch |
| P2 | first pitch |
| P3 | second pitch |

## Claims

1. Power transmission chain comprising alternately connected and overlapping inner and outer links, in which:

   each inner link comprises a pair of opposed inner plates (41), each inner plate (41) having a pair of bushing holes (41a), and a pair of bushings (42), each bushing (42) being press-fit in one bushing hole (41 a) of one of the inner plates (41) and in one bushing hole (41a) of the other of the inner plates (41),
   each outer link comprises a pair of opposed outer plates (44), each outer plate (44) having a pair of pin holes (44a), and a pair of pins (45), each pin (45) being press-fit in one pin hole (44a) of one of the outer plates (44) and in one pin hole (44a) of the other of the outer plates (44),

the outer plates (44) of each outer link are disposed in overlapping relation with, and on the outsides of, inner plates (41) of adjacent inner links, and each pin (45) of an outer link extends through, and is rotatable in, a bushing (42) of an adjacent inner link, whereby the inner and outer links are pivotally connected to one another, the chain (40) has a first uniform pitch (P2), measured from one to the other of the two adjacent bushings (42) of any two successive inner links of the chain (40), and a second uniform pitch (P1, P3), measured from one bushing (42) to another of the two bushings (42) on any one of the inner links of the chain (40), **characterized in that**

when the chain (40) is new, the first uniform pitch (P2) is smaller than the second uniform pitch (P1, P3).

2. Power transmission chain according to claim 1, in which initially the first uniform pitch (P2) is smaller than the second uniform pitch (P1, P3) by an amount substantially equal to the initial wear elongation of the chain (40).

3. Power transmission chain according to claim 1 or 2, including a roller (43) rotatably disposed on each the bushing (42).

4. Power transmission chain according to claim 1, 2 or 3, **characterized in that** initially the the first uniform pitch (P2) is about 0,1 % smaller than the second uniform pitch (P1, P3).

5. Power transmission chain according to any of claims 1 to 4, **characterized in that**, after initial wear elongation, the first uniform pitch (P2) is about equal to or slightly greater than the second uniform pitch (P1, P3).

## Patentansprüche

1. Kraftübertragungskette, aufweisend abwechselnd miteinander verbundene und sich überlappende innere und äußere Verbindungsglieder, bei der:

jedes innere Verbindungsglied ein Paar von gegenüberliegenden inneren Laschen (41) aufweist, wobei jede innere Lasche (41) ein Paar von Buchsenlöchern (41a) und ein Paar von Buchsen (42) hat, jede Buchse (42) in ein Buchsenloch (41a) einer der Innenplatten (41) und in ein Buchsenloch (41a) der anderen der inneren Lasche (41) eingepresst ist,
jedes äußere Verbindungsglied weist ein Paar von gegenüberliegenden äußeren Laschen (44) aufweist, wobei jede äußere Lasche (44) ein Paar von Stiftlöchern (44a) und ein Paar Stifte (45) hat, jeder Stift (45) in ein Stiftloch (44a) von einer der äußeren Platten (44) und in einem Stiftloch (44a) der anderen der äußeren Platten (44) eingepresst ist,
die äußeren Laschen (44) jedes äußeren Verbindungsglieds in überlappendem Verhältnis zueinander angeordnet sind und an den Außenseiten der inneren Laschen (41) von benachbarten inneren Verbindungsgliedern angeordnet sind, und jeder Stift (45) eines äußeren Verbindungsglieds sich durch eine Buchse (42) eines benachbarten inneren Verbindungsglieds erstreckt und hierin drehbar ist, wodurch die inneren und äußeren Verbindungsglieder schwenkbar miteinander verbunden sind,
die Kette (40) eine erste gleichförmige Teilung (P2) hat, gemessen von einer zum anderen der beiden benachbarten Buchsen (42) von zwei beliebigen aufeinanderfolgenden inneren Verbindungsgliedern der Kette (40), und eine zweite gleichförmige Teilung (P1, P3), gemessen von einer Buchse (42) zu einer anderen der beiden Buchsen (42) an einem der inneren Verbindungsglieder der Kette (40) hat,
**dadurch gekennzeichnet, dass**, wenn die Kette (40) neu ist, ist die erste gleichförmige Teilung (P2), kleiner als die zweite gleichförmige Teilung (P1, P3) ist.

2. Kraftübertragungskette nach Anspruch 1, bei der zunächst die erste gleichförmige Teilung (P2) um einen Betrag im wesentlichen gleich der anfänglichen Verlängerung der Kette (40) durch Verschleiß kleiner als die zweite gleichförmige Teilung (P1, P3) ist.

3. Kraftübertragungskette nach Anspruch 1 oder 2, aufweisend eine Rolle (43), die drehbar auf jeder der Buchse (42) angeordnet ist.

4. Kraftübertragungskette nach Anspruch 1, 2 oder 3, **dadurch gekennzeichnet, dass** ausgangsmäßig die erste gleichförmige Teilung (P2) etwa 0,1% kleiner ist als die zweite erste gleichförmige Teilung (P1, P3) ist.

5. Kraftübertragungskette nach einem der Ansprüche 1 bis 4, **dadurch gekennzeichnet, dass** nach der anfänglichen Verlängerung durch Verschleiß die erste erste gleichförmige Teilung (P2) etwa gleich oder etwas größer als das zweite erste gleichförmige Teilung (P1, P3) ist.

**Revendications**

1. Chaîne de transmission de puissance comprenant des liens intérieurs et extérieurs connectés de façon alternative et chevauchés, où:

   chaque lien intérieur comprend une paire de plaques intérieures opposées (41), chaque plaque intérieure (41) ayant une paire de trous de coussinet (41a), et une paire de coussinets (42), chaque coussinet (42) étant adapté par ajustement serré dans un trou de coussinet (41a) de l'une des plaques intérieures (41) et dans un trou de coussinet (41a) de l'autre des plaques intérieures (41),
   chaque lien extérieur comprend une paire de plaques extérieures opposées (44), chaque plaque extérieure (44) ayant une paire de trous de cheville (44a), et une paire de chevilles (45), chaque cheville (45) étant adaptée par ajustement serré dans un trou de cheville (44a) de l'une des plaques extérieures (44) et dans un trou de cheville (44a) de l'autre des plaques extérieures (44),
   les plaques extérieures (44) de chaque lien extérieur sont disposées de façon chevauchée avec, et sur les parties extérieures de, les plaques intérieures (41) des liens intérieurs adjacents, et chaque cheville (45) d'un lien extérieur s'étend à travers de, et est rotatif sur, un coussinet (42) d'un lien intérieur adjacent, de manière à ce que les liens intérieurs et extérieurs sont connectés en pivotement l'un à l'autre,
   la chaîne (40) a un premier pas uniforme (P2), mesuré de l'un à l'autre des deux coussinets adjacents (42) de n'importe lequel des deux liens intérieurs successifs de la chaîne (40), et un deuxième pas uniforme (P1, P3), mesuré d'un coussinet (42) à un autre des deux coussinets (42) sur n'importe lequel des liens intérieurs de la chaîne (40), **caractérisée en ce que** lorsque la chaîne (40) est nouvelle, le premier pas uniforme (P2) est plus petit que le deuxième pas uniforme (P1, P3).

2. Chaîne de transmission de puissance selon la revendication 1, où initialement le premier pas uniforme (P2) est plus petit que le deuxième pas uniforme (P1, P3) par une quantité substantiellement égale à l'allongement d'usure initial de la chaîne (40).

3. Chaîne de transmission de puissance selon la revendication 1 ou 2, comprenant un rouleau (43) disposé rotativement sur chaque coussinet (42).

4. Chaîne de transmission de puissance selon la revendication 1, 2 ou 3, **caractérisée en ce qu'**initialement le premier pas uniforme (P2) est approximativement 0,1 % plus petit que le deuxième pas uniforme (P1, P3).

5. Chaîne de transmission de puissance selon l'une quelconque des revendications 1 à 4, **caractérisée en ce que**, après l'allongement d'usure initial, le premier pas uniforme (P2) est environ égal ou légèrement supérieur au deuxième pas uniforme (P1, P3).

# Fig. 1 (a)

Pitch difference

Conventional product

Product of the present invention

O

# Fig. 1 (b)

Noise level

Conventional product

Product of the present invention

O

# Fig. 2

○ Present Invention

P1  P2  P3

$P_L$  $P_S$  $P_L$

○ Cited Invention ( USP 4,315,750)

33 F  32 34 31 E  F 32 34 E  F

33

28

31  28  28b

$P_L$  $P_S$  $P_L$

# Fig. 3

# Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4315750 A

**Non-patent literature cited in the description**

- **MASATAKA NAKAGOME.** Chain No Ohanashi'' (''Chain's story). Japanese Standards Association (JSA), 20 January 1997